# EUROPÄISCHE PATENTANMELDUNG

(11) **EP 4 339 713 A1**
(43) Veröffentlichungstag der Anmeldung: **20.03.2024**
(21) Anmeldenummer: 23197066.6
(22) Anmeldetag: 13.09.2023
(51) Int. Cl.: G03H 1/26, G03H 1/20, G03H 1/00, G03H 1/02, G03H 1/28, G03H 1/30

(54) **HOLOGRAMMMASTER FÜR DIE HERSTELLUNG EINES SICHERHEITSELEMENTS MIT EINEM OPTISCH VARIABLEN HOLOGRAFISCHEN SICHERHEITSMERKMAL UND HERSTELLUNGSVERFAHREN**

(30) Priorität: 13.09.2022 DE 102022209583
(71) Anmelder: Bundesdruckerei GmbH, 10969 Berlin (DE)
(72) Erfinder: TRIES, Alexander, 10553 Berlin (DE); KUNATH, Christian, 12203 Berlin (DE); GAHLBECK, Jeffry, 15517 Fürstenwalde (DE); SPRENGER, Martin, 10317 Berlin (DE); KLÜNDER, Kathrin, 10179 Berlin (DE)
(74) Vertreter: Patentanwälte Bressel und Partner mbB

(57) **Zusammenfassung**

Die Erfindung betrifft einen Hologrammmaster (1000) für das Erzeugen von Sicherheitselementen (5001) mit einem optisch variablen holografischen Sicherheitsmerkmal umfassend einen Masterkörper (1010) mit einer Oberfläche (1011), wobei in dem Masterkörper (1010) mehrere unterschiedliche Beugungsstrukturen (1120, 1220, 1320) ausgebildet sind, wobei jede der mehreren unterschiedlichen Beugungsstrukturen (1120, 1220, 1320) eine Rekonstruktionsgeometrie aufweist, die von den Rekonstruktionsgeometrien der andern der mehreren unterschiedlichen Beugungsstrukturen (1120, 1220, 1320) verschieden ist, wobei jede Rekonstruktionsgeometrie durch eine Belichtungseinfallrichtung und eine Beugungslichtausfallrichtung bezogen auf die eine Oberfläche des Masterkörpers definiert sind und bei einer Einstrahlung von Rekonstruktionslicht entlang der Belichtungseinfallrichtung der entsprechenden der mehreren unterschiedlichen Beugungsstrukturen (1120, 1220, 1320) diese Licht in die Beugungslichtausfallrichtung (1140, 1240, 1340) beugt, wobei jede der mehreren unterschiedlichen Beugungsstrukturen unter der jeweiligen zugehörigen Rekonstruktionsgeometrie (1160, 1260, 1360) jeweils mindestens eine im mathematischen Sinne wegzusammenhängende, eine einheitliche homogene von null verschiedene Beugungseffizienz aufweisende Fläche (1170, 1270, 1370) rekonstruiert, die jeweils als eine homogen leuchtende Fläche (1170', 1270', 1370`) erfassbar ist. Die Erfindung betrifft ferner das Herstellen von Sicherheitselementen, die vorzugsweise als Volumenhologramme (2100, 2200, 2300) ausgebildete personalisierte Kontaktkopien der Beugungsstrukturen (1120, 1220, 1320) des Hologrammmasters (1000) umfassen.

## Beschreibung

Die Erfindung betrifft allgemein Hologrammmaster für die Herstellung von Sicherheitselementen mit einem holografischen Sicherheitsmerkmal sowie ein Verfahren zur Herstellung solcher Sicherheitselemente. Insbesondere betrifft die Erfindung einen Hologrammmaster für die Herstellung von Hologrammen mit einem optisch variablen, insbesondere kinetischen Sicherheitsmerkmal. Die Erfindung betrifft ferner die Serienfertigung solcher Sicherheitselemente und die so hergestellten Sicherheitselemente selbst.

Sicherheitselemente weisen Sicherheitsmerkmale auf, um deren Echtheit und Unverfälschtheit prüfen zu können. Ein Sicherheitsmerkmal ist hierbei jedes Merkmal, welches geeignet ist, die Authentizität des mit dem Sicherheitsmerkmal versehenen Elements überprüfen zu können. Ein Sicherheitselement ist jede physische Einheit, die ein solches Sicherheitsmerkmal aufweist. Insbesondere sind Sicherheitsdokumente, wie Reisepässe, Führerscheine, Visa usw. oder Wertdokumente, wie Bankkarten, Schecks, Wertmarken usw. Sicherheitselemente, aber auch Halbzeuge, wie Hologrammfilme für das Einfügen in Sicherheitsdokumente etc., sind Sicherheitselemente.

Ein Überprüfen eines Sicherheitsmerkmals wird als Verifikation bezeichnet. Eine Gruppe von Sicherheitsmerkmalen ist für eine optische Verifikation vorgesehen. Eine Untergruppe von Sicherheitsmerkmalen nutzt Eigenschaften von Hologrammen.

Beispielsweise werden in Reisepässen und Personalausweisen der Bundesrepublik Deutschland Volumenreflexionshologramme eingesetzt, die ein Passbild sowie persönliche Daten, wie die Namen und die Ausweisnummer, die jeweils auch drucktechnisch in dem Ausweis wiedergegeben sind, speichern. Bei einer entsprechenden Beleuchtung mit Rekonstruktionslicht einer geeigneten Wellenlänge sowie geeigneter Einstrahlungsrichtung und einer Betrachtung unter einer geeigneten Richtung sind die persönlichen Daten bei der Verifikation wahrnehmbar. Diese Hologramme werden in einem sogenannten Kontaktkopierverfahren hergestellt.

Ein Masterhologramm, welches beispielsweise ein Reflexionshologramm einer Mattscheibe ist, wird über einen räumlichen Lichtmodulator beim Kontaktkopieren individualisiert in das später auf dem Sicherheitsdokument verwendete Volumenreflexionshologramm belichtet. Die EP 0 896 260 A2 beschreibt die Herstellung eines solchen Hologrammmasters. Erwähnt ist ferner, dass beim Kopieren des Masterhologramms eine Belichtung unter unterschiedlichen Aspektwinkeln erfolgen kann, um einen Stereoeffekt zu erzielen.

Ebenso ist es bekannt, dass es mit der Holografie möglich ist, von realen dreidimensionalen Objekten in einen Film unmittelbar Hologramme zu belichten, die anschließend eine dreidimensionale Betrachtung des Objekts bei der Rekonstruktion ermöglichen. Verändert ein Nutzer seine Betrachtungsposition, so sieht er eine andere Ansicht des dreidimensionalen Objekts bei der Rekonstruktion. Eine Herstellung von solchen dreidimensionalen Hologrammen ist jedoch sehr aufwendig und daher für die Nutzung als Sicherheitselement in einer Serie nur begrenzt tauglich. Insbesondere ist es schwierig, individuelle Hologramme herzustellen, die einen dreidimensionalen Eindruck bei der Rekonstruktion und bei der Betrachtung unterschiedliche Ansichten des Objekts aus unterschiedlichen Richtungen liefern. Gegenüber Hologrammen, die bei einer Rekonstruktion eine Streuscheibe ganz oder zumindest bildpunktweise kopiert wiedergeben, sind diese dreidimensionalen Hologramme häufig lichtschwach, insbesondere wenn sich die widergegebene Information beim Ändern der Betrachtungsrichtung deutlich verändert.

Aus dem Stand der Technik sind darrüberhinaus kinetische Beugungsstrukturen wie ein Kinegram^{®} bekannt, die auf errechneten Beugungsstrukturen beruhen. Einfache geometrische Figuren wie beispielsweise Sterne oder Vielecke erscheinen bei einer Verifikation abhängig von Betrachtungsrichtung und/oder einer Einstrahlrichtung von Rekonstruktionslicht an unterschiedlichen, benachbarten Positionen. Dieses wird als ein Wandern oder als eine Bewegung der geometrischen Figuren wahrgenommen, weshalb ein solches Sicherheitsmerkmal als kinetisch bezeichnet wird.

Die Herstellung eines Hologrammmasters für diese Beugungsstrukturen ist aufwendig. Somit können diese kinetischen Beugungsstrukturen bei der Serienherstellung von Sicherheitselementen nicht für jedes Sicherheitselement individuell ausgestaltet werden.

Der Erfindung liegt die Aufgabe zugrunde einen Hologrammmaster und ein Verfahren zu schaffen, mit denen individualisierte Hologramme, insbesondere in der Serienfertigung herstellbar sind, die ein optisch variables holografisches Sicherheitsmerkmal aufweisen, sowie gut verifizierbare Sicherheitselemente zu schaffen.

Die Erfindung wird durch einen Hologrammmaster mit den Merkmalen des Anspruchs 1, ein Verfahren mit den Merkmalen des Anspruchs 9 sowie ein Sicherheitselement mit den Merkmalen des Anspruch 13 gelöst. Vorteilhafte Ausgestaltungen der Erfindung ergeben sich aus den Unteransprüchen.

### Grundidee der Erfindung

Der Erfindung liegt die Idee zugrunde in dem Master mehrere Beugungsstrukturen auszubilden, die unterschiedliche Rekonstruktionsgeometrien aufweisen und jeweils mindestens eine im mathematischen Sinne wegzusammenhängende, eine einheitlich homogene von null verschiedene Beugungseffizienz aufweisende Fläche rekonstruieren, die jeweils als eine homogen leuchtende Fläche erfassbar ist.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheitsdokument, welches auch ein Wertdokument sein kann, verbunden, beispielsweise verklebt, werden kann. Es kann sich aber auch um einen integralen Bestandteil eines Sicherheitsdokumentes handeln. Ein Beispiel für Erstes ist ein auf ein Sicherheitsdokument aufklebbares Visum. Ein Beispiel für Letzteres ist ein in einen Geldschein oder einen Ausweis integriertes, beispielsweise einlaminierter Hologrammfilm.

Ein Sicherheitsmerkmal ist ein Merkmal, das nur mit (gegenüber einfachem Kopieren) erhöhtem Aufwand oder gar nicht unautorisiert herstellbar bzw. reproduzierbar ist.

Als Sicherheitsdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Wertdokumente, wie Banknoten, Schecks, Postwertzeichen, Kreditkarten, beliebige Chipkarten und Haftetiketten (z.B. zur Produktsicherung). Solche Sicherheitsdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage. Ein Substrat wird auch genutzt, um hierauf ein Hologramm als Sicherheitselement auf- oder anzubringen.

Ein Spatial Light Modulator (SLM) erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch sich durch entsprechende Ansteuerung der SLM-Pixel Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein holografisches Speichermedium oder Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Lediglich beispielhaft seien die in der Holografie oft verwendeten Photopolymere genannt.

Als Hologramm wird eine in einem holografischen Speichermedium gespeicherte, mittels einer Interferenzstruktur eines Lichtfelds erzeugbare Beugungsstruktur aufgefasst, wobei ein zumindest ein Teil des die Interferenzstruktur bildenden Lichtfelds eine bildliche Information repräsentiert, die bei einer entsprechenden Belichtung des Hologramms mit kohärentem Licht rekonstruiert werden kann. Ein Speichermedium kann mehrere auch einander überlagernde Hologramme speichern.

Unter dem Begriff Rekonstruktionsgeometrie wird allgemein eine Geometrie verstanden, die zum Rekonstruieren eines Hologramms verwendet wird. Diese ist durch einen Einfallwinkel (oder äquivalent eine Rekonstruktionslichteinfallrichtung) des zur Beleuchtung genutzten Lichts und einen Ausfallwinkel (oder äquivalent eine Beugungslichtausfallrichtung), unter dem das Hologramm mit optimaler Helligkeit betrachtet werden kann, gekennzeichnet. Beide Winkel(/Richtungen) können unabhängig voneinander variiert werden, um eine Rekonstruktionsgeometrie zu verändern. Eine optimale Rekonstruktionsgeometrie ist jene Geometrie, bei der das Hologramm optimal rekonstruiert wird.

Da eine Lichtbeugung auch von der Wellenlänge des Lichts abhängig ist, werden Rekonstruktionsgeometrien hier auch nach der Wellenlänge unterschieden, für die diese gelten. Bei dünnen Hologrammen ändern sich die Beugungswinkel mit einer Änderung der Wellenlänge des Rekonstruktionslichts. Bei dicken Hologrammen, d.h. Volumenhologrammen, die eine Wellenlängenselektivität aufweisen, ändert sich mit einer Änderung der Wellenlänge des Rekonstruktionslichts das Hologramm, welches rekonstruiert wird. Sind somit Rekonstruktionslichteinfallwinkel und Beugungslichtausfallwinkel für zwei verschieden Wellenlängen identisch, so werden zwei verschieden Hologramme rekonstruiert, die unterschiedliche Rekonstruktionsgeometrien aufweisen, die sich hinsichtlich der Wellenlänge unterscheiden.

Ein Einfallwinkel und ein Ausfallwinkel sind hier jeweils als Raumwinkel zu verstehen, die einen Elevationswinkelanteil und einen Azimutalwinkelanteil aufweisen, die bezüglich eines mit der makroskopischen Oberfläche des Hologrammmasters oder holografischen Speichermediums verknüpften Koordinatensystems definiert sind, dessen Ursprung im Auftreffpunkt des eingestrahlten als ein gradlinig strichförmiger Strahl angenommenen Rekonstruktionslichts liegt. Bei einem divergierenden Lichtstrahl wird ein Zentralstrahl für die Betrachtung herangezogen.

Ein Rekonstruktionslichteinfallwinkel ist der Winkel, unter dem Rekonstruktionslicht relativ zur Oberfläche des die rekonstruierte Beugungsstruktur umfassenden Körpers bei der Rekonstruktion einfällt. Bei einem Kontaktkopiervorgang ist dieses der Winkel unter dem beim Kopieren der Hologrammmaster belichtet wird, um die entsprechend Beugungsstruktur, in der Regel ein Hologramm, zu rekonstruieren. Der Winkel, unter dem die Rekonstruktion entsteht, wird als Beugungslichtausfallwinkel bezeichnet. Der Rekonstruktionslichteinfallwinkel korrespondiert mit einer Rekonstruktionslichteinfallrichtung. Der Beugungslichtausfallwinkel korrespondiert mit einer Beugungslichtausfallrichtung.

### Bevorzugte Ausführungsformen

Zur Lösung der technischen Aufgabe wird insbesondere ein Hologrammmaster für das Erzeugen von Sicherheitselementen mit einem optisch variablen holografischen Sicherheitsmerkmal umfassend einen Masterkörper mit einer Oberfläche geschaffen, wobei in dem Masterkörper mehrere unterschiedliche Beugungsstrukturen ausgebildet sind, wobei jede der mehreren unterschiedlichen Beugungsstrukturen eine Rekonstruktionsgeometrie aufweist, die von den Rekonstruktionsgeometrien der andern der mehreren unterschiedlichen Beugungsstrukturen verschieden ist, wobei jede Rekonstruktionsgeometrie durch eine Rekonstruktionslichteinfallrichtung und eine Beugungslichtausfallrichtung bezogen auf die eine Oberfläche des Masterkörpers definiert sind und bei einer Einstrahlung von Rekonstruktionslicht entlang der Belichtungseinfallrichtung der entsprechenden der mehreren unterschiedlichen Beugungsstrukturen diese Rekonstruktionslicht in die Beugungslichtausfallrichtung beugt, wobei jede der mehreren unterschiedlichen Beugungsstrukturen unter der jeweiligen (zugehörigen) Rekonstruktionsgeometrie jeweils mindestens eine im mathematischen Sinne wegzusammenhängende, eine einheitlich homogene von null verschiedene Beugungseffizienz aufweisende Fläche rekonstruiert oder rekonstruieren kann, die jeweils als eine homogen leuchtende Fläche erfassbar ist. Solche Hologrammmaster eignen sich, um hiermit für jedes im Kopierverfahren hergestellte Sicherheitselement individualisierte Hologramme herzustellen, die jeweils individuell für das eine Sicherheitselement oder eine Untergruppe von Sicherheitselementen einer Gesamtheit an hergestellten Sicherheitselementen ist und zugleich in jedem der Sicherheitselemente eine Rekonstruktionsgeometrieabhängigkeit der gespeicherten Informationen der einzelnen Hologramme besteht.

Entsprechend wir ein Verfahren zum Erzeugen eines Sicherheitselements mit einem optisch variablen holografischen Sicherheitsmerkmal geschaffen, welches umfasst: Bereitstellen eines Hologrammmasters wie hier beschrieben, der den Masterkörper mit den mehren unterschiedlichen Beugungsstrukturen aufweist;
Bereitstellen eines holografischen Speichermediums;
Anordnen des holografischen Speichermediums in mechanischem Kontakt mit der einen Oberfläche des Masterkörpers des Hologrammmasters;
Erzeugen kohärenten Lichts und Einstrahlen des kohärenten Lichts auf den Hologrammmaster und das holografische Speichermedium, dass zumindest ein Teil des kohärenten Lichts an dem Hologrammmaster gebeugt wird und das holografische Speichermedium sowohl von gebeugtem als auch von nicht gebeugtem kohärenten Licht durchstrahlt wird, so dass eine Interferenz zwischen dem gebeugten und dem nicht gebeugten kohärenten Licht als Hologramm oder Hologramme in dem holografischen Speichermedium gespeichert wird,
wobei das Einstrahlen des kohärenten Lichts so erfolgt, dass von mindestens zwei der mehreren unterschiedlichen Beugungsstrukturen, die unterschiedliche Rekonstruktionsgeometrien aufweisen und die jeweils mindestens eine im mathematischen Sinne wegzusammenhängende, eine einheitlich homogene von null verschiedene Beugungseffizienz aufweisende Fläche rekonstruieren können, die diese Fläche rekonstruierende Anteile zumindest teilweise rekonstruiert und in die Speicherschicht als Hologramme kopiert werden.

Ferner werden somit Sicherheitselemente und eine Vielzahl von Sicherheitselementen geschaffen, die in Serie hergestellt werden.

Vorzugsweise werden die eine wegzusammenhängende einheitlich hell rekonstruierenden Flächen der unterschiedlichen Beugungsstrukturen beim Kopieren so modifiziert, z.B. indem diese mit ortsabhängig intensitätsvariiertem Rekonstruktionslicht kopiert werden, dass ein menschlicher Betrachter, wenn er in Abfolge unterschiedliche der individualisiert kopierten Beugungsstrukturen unter den zugehörigen verschiedenen Rekonstruktionsgeometrien rekonstruiert, eine Bewegung einer Information wahrnimmt.

Eine Weiterbildung des Verfahrens sieht daher vor, dass das Rekonstruktionslicht beim Kopieren von mindestens zwei der in dem Hologrammmaster enthaltenen unterschiedlichen Beugungsstrukturen jeweils flächig hinsichtlich der Intensität moduliert wird, so dass diese mindestens zwei der mehreren unterschiedlichen Beugungsstrukturen modifiziert in das Speichermedium als Hologramme gespeichert werden, so dass die jeweiligen mindestens eine im mathematischen Sinne wegzusammenhängende, eine einheitlich homogene von null verschiedene Beugungseffizienz aufweisenden Flächen mit über diese Fläche variierenden Beugungseffizienzen in die entsprechenden verschiedenen Hologramme in das Speichermedium gespeichert werden.

Beispielsweise kann eine Position, an der eine alphanumerische Zeichenkette, die in den kopierten Beugungsstrukturen ausgebildet ist, in den erfassten Rekonstruktionen als auf der Oberfläche des Sicherheitselements wandern wahrgenommen werden, da die alphanumerische Zeichenkette an veränderten Positionen relativ zur Oberfläche des Sicherheitselements in mehreren verschiedenen intensitätsmodulierten/beugungseffizienzmodulierten kopierten Beugungsstrukturen bei der Rekonstruktion erscheinen.

Alternativ kann der Schriftzug sich aufblättern und/oder wieder zublättern. Unter einer ersten Rekonstruktionsgeometrie des mit dem Hologrammmaster hergestellten Sicherheitselements ist beispielsweise nur der Buchstabe "N " erfassbar. Bei einem kontinuierlichen Wechsel der Rekonstruktionsgeometrien sind dann beispielsweise nacheinander "Na ", "Nam ", "Name", " ame", " me", "e" erfassbar. Der Schriftzug wird "aufgeblättert" und wieder "zugeblättert".

Eine Weiterbildung des Verfahrens sieht daher vor, dass die mindestens zwei der mehreren unterschiedlichen Beugungsstrukturen mit unterschiedlich flächig moduliertem Rekonstruktionslicht kopiert werden.

Es wird somit eine Vielzahl von Sicherheitselementen geschaffen die bei der Serienfertigung individualisiert, insbesondere personalisiert werden: Die Sicherheitsmerkmale unterscheiden sich hinsichtlich der kopierten Hologramme, die unterschiedliche Informationen speichern.

Wird die Änderung der Rekonstruktionsgeometrien beispielsweise über ein Verkippen des Sicherheitselements bezüglich einer Erfassungsrichtung und/oder einer Rekonstruktionslichtquelle bewirkt, können die unterschiedlichen hellen Flächen örtlich so modifiziert kopiert werden, dass jede Fläche das Gesichtsbild einer Person aus einer veränderten Perspektive zeigt. Die sich ergebende Bewegung kann gleich oder gegenläufig zu dem Verkippen ausgebildet sein. Beispielsweise kann bei einer Ausführungsform bei einer Rekonstruktionsgeometrie des Sicherheitselements die frontale Ansicht des Gesichtsbilds einer Person gezeigt sein. Wird in diesem Beispiel die Rekonstruktionsgeometrie durch ein Verkippen des Sicherheitselements in der Weise verändert, wie sich das Sicherheitselement bewegen würde, wenn Gesichtsbild und Person mit dem Sicherheitselement mechanisch gekoppelt wäre und die Person ihren Kopf zu ihrer rechten Schulter dreht, so wird unter dieser Rekonstruktionsgeometrie beispielsweise ein Halbprofil oder Profil der linken Gesichtshälfte der Person gezeigt. Die erfasste Bewegung der Person, die hierdurch erfassbar ist, gleicht der Bewegung der der Verkippung. Als gegenläufig wird die Situation bezeichnet, bei der bei derselben Verkippung des Sicherheitselements wie zuvor beschrieben, das rechte Halbprofil oder Profil der Person gezeigt ist. Obwohl das Sicherheitselement so bewegt und verkippt wird, wie eine gegenüberstehende betrachtete Person Ihren Kopf aus der zentralen Geradeaussicht zu ihrer rechten Schulter dreht. wir eine Bewegung gezeigt, die mit einer Bewegung verknüpft wäre bei der die Person den Kopf zu ihrer linken Schulter dreht. Dieses wird als gegenläufig bezeichnet. Bei diesem letzten geläufigen Beispiel entspricht die "gezeigte Gegenbewegung" dem doppelten Drehwinkel verglichen mit dem Drehwinkel der Verkippung.

Ebenso ist es möglich die beiden Varianten zu kombinieren. Für einige Rekonstruktionsgeometrien zeigt sich beim Wechsel von der einen Rekonstruktionsgeometrie zur anderen Rekonstruktionsgeometrie ein gleichläufiges Bewegungsverhalten für andere Rekonstruktionsgeometrien zeigt sich beim Übergang aufgrund des Verkippens jedoch ein gegenläufiges Bewegungsverhalten.

Ferner kann das Verhältnis zwischen dem Winkel des Verkippens und hiermit assoziierten Bewegungswinkel gewählt werden, dieser kann auch in einer Bewegung variieren, was beispielsweise bei einem Verkippen mit einer konstanten Winkelgeschwindigkeit eine beschleunigte oder verzögerte Bewegung des dargestellten Objekts zeigt.

Wieder andere Ausführungsformen können jeweils dasselbe Gesichtsbild in die unterschiedlichen hellen Flächen kopieren. Bei einem Verkippen des Sicherheitselements zum Rekonstruieren unter verschiedenen Rekonstruktionsgeometrien scheint die abgebildete Person der Kippbewegung selbst zu folgen. Anders als bei einem parallaxenbehafteten Hologramm, sieht man somit nicht das Objekt aus unterschiedlichen Richtungen oder dreidimensionalen Perspektiven. Dieses entspricht einer gegenläufigen Bewegung, bei der der Winkel des Verkippens und der Bewegungswinkel betragsmäßig gleich groß sind.

Einige Ausführungsformen sehen daher vor, dass das unterschiedliche flächige Modulieren gemäß persönlichen Informationen einer Person erfolgt, der das hergestellte Sicherheitselement zugeordnet ist.

Um eine möglichst hohe Beugungseffizienz bei der Rekonstruktion der Hologramme des Hologrammmasters zu erreichen und ferner eine möglichst hohe Helligkeit bei der Rekonstruktion der einzelnen Hologramme eines mit Hilfe des Hologrammmasters hergestellten Sicherheitselements zu erreichen, sind bei einer bevorzugten Ausführungsform die mehreren unterschiedlichen Beugungsstrukturen Volumenhologramme, vorzugsweise Volumenreflexionshologramme. Beim Kopieren ist die Einstrahlung unter der korrekten Rekonstruktionslichteinfallrichtung notwendig, um ein entsprechendes Hologramm in dem Hologrammmaster oder in einem entsprechend hiermit hergestellten Sicherheitselement zu rekonstruieren. Volumenhologramm zeigen eine hohe Winkel- und Wellenlängenselektivität. Hierdurch ist es zum einen möglich, die Hologramme des hergestellten Sicherheitselements unter Weißlichtbedingungen zu rekonstruieren, da die Hologramme die Wellenlänge "selektieren", die zur Rekonstruktion benötigt wird. Die Winkelselektivität sorgt auch dafür, dass auch die Richtung unter der die Beugung stattfindet genau definiert ist.

Die Volumenhologramme des Hologrammmasters, die jeweils mindestens eine, vorzugsweise genau eine, im mathematischen Sinne wegzusammenhängende, eine einheitlich homogene von null verschiedene Beugungseffizienz aufweisende Fläche rekonstruieren, die jeweils als eine homogen leuchtende Fläche erfassbar ist, sind vorzugsweise als Volumenhologramme eines Spiegels oder einer Streuscheibe ausgebildet, die bei der Rekonstruktion in genau eine Richtung oder in einen begrenzten Winkelbereich um eine Richtung, die Beugungslichtausfallrichtung, beugen. Die leichte Aufweitung auf einen begrenzten Winkelbereich, vorzugweise auf plus/minus 5°, noch bevorzugter auf plus/minus 3°, bietet den Vorteil, dass das Auffinden der jeweiligen Rekonstruktionsgeometrien in den mit dem Hologrammmaster hergestellten, kopierte Volumenhologramme aufweisenden Sicherheitselementen leichter ist. Die Begrenzung des Beugungsbereichs sorgt jedoch dafür, dass unter der Beugungslichtausfallrichtung eine hohe Helligkeit erzeugbar ist.

Bei einer Ausführungsform ist vorgesehen, dass die mehreren unterschiedlichen Beugungsstrukturen in dem Hologrammmaster bezogen auf dessen eine Oberfläche des Masterkörpers in unterschiedlichen nebeneinander angeordneten, voneinander disjunkten Bereichen ausgebildet sind. Beim Kopieren des Hologrammmasters in einem Kontaktkopierverfahren, bei dem das holografische Speichermedium in mechanischem Kontakt mit der einen Oberfläche des Masterkörpers des Hologrammmasters gebracht wird, kann für jede der Beugungsstrukturen in dem hergestellten Sicherheitselement eine maximal mögliche Beugungseffizienz erreicht werden.

Allgemein gilt, dass für die Speicherung der kopierten Beugungsstrukturen zur Verfügung stehende Volumen z. B. hinsichtlich der möglichen erreichbaren Brechungsindexvariation aufgrund der beim Kopieren entstehenden Interferenzmuster limitiert ist. Werden im gleichen Volumen somit mehrere Hologramme gespeichert, sinkt vereinfacht ausgedrückt die für die einzelnen Hologramme verfügbare Beugungseffizienz. Werden die verschiedenen Beugungsstrukturen, in räumlich getrennte Volumina kopiert, so können diese mit einer besonders hohen Beugungseffizienz ausgebildet werden, was mit einer hohen Helligkeit bei der Rekonstruktion korrespondiert. Aufgrund der getrennten Bereiche, in denen die Beugungsstrukturen ausgebildet sind, werden diese bei einem Kontaktkopierverfahren auch in nebeneinander angeordnete Bereiche kopiert. Bei der Rekonstruktion werden die gegebenenfalls intensitätsmodulierten hellen Flächen an unterschiedlichen Positionen relativ zu dem Sicherheitselement wahrgenommen. Ein kinetischer Effekt, ein Bewegungseffekt, wird hierdurch begünstigt und/oder verstärkt. Bei einer anderen Ausführungsform ist vorgesehen, dass sich zumindest einige der mehreren unterschiedlichen Beugungsstrukturen in dem Hologrammmaster bezogen auf dessen eine Oberfläche des Masterkörpers in einander zumindest teilweise überlappenden Bereichen ausgebildet sind. Hierdurch können in kopierten Sicherheitselementen kinetische Effekte realisiert werden, bei denen die "Bewegung" der Gesamtinformation bezüglich des Sicherheitselements im Verhältnis zur maximalen Größe der einzelnen Information geringer gewählt werden kann als bei einer Ausführungsform mit disjunkten Bereichen der Beugungsstrukturen im Hologrammmaster.

Insbesondere um kinetische Informationen zu speichern, die nicht mit einer "translatorisch" wahrgenommenen Bewegung der Information bezüglich des Sicherheitselements verknüpft sind, ist bei einer Ausführungsform vorgesehen, dass einer der einander zumindest teilweise überlappenden Bereiche, in dem zumindest eine der mehreren unterschiedlichen Beugungsstrukturen ausgebildet ist, einen anderen der einander zumindest teilweise überlappenden Bereiche, in dem eine andere der unterschiedlichen Beugungsstrukturen ausgebildet ist, in dem Hologrammmaster bezogen auf dessen Oberfläche vollständig überlappt.

Bevorzugt werden Ausführungsformen, bei denen der eine der einander zumindest teilweise überlappenden Bereiche und der andere der einander zumindest teilweise überlappenden Bereiche in dem Hologrammmaster bezogen auf dessen eine Oberfläche des Masterkörpers deckungsgleich ausgebildet sind. Vorzugsweise sind somit die rekonstruierten wegzusammenhängenden, eine einheitliche homogene von null verschiedene Beugungseffizienz aufweisende Flächen deckungsgleich bezogen auf die eine Oberfläche des Masterkörpers des Hologrammmasters.

Besonders bevorzugt sind die Beugungsstrukturen des Hologrammmasters so ausgebildet, dass die unterschiedlichen Beugungsstrukturen unter den jeweiligen zugehörigen Beugungsgeometrien ihre jeweilige mindestens eine im mathematischen Sinne wegzusammenhängende, eine einheitliche homogene, von null verschiedene Beugungseffizienz aufweisende Fläche alle mit derselben Beugungseffizienz rekonstruieren. Beim Kopieren identisch belichtete Strukturen werden dann mit identischer Beugungseffizienz kopiert und ergeben bei der Rekonstruktion des Sicherheitselements gleich helle Informationen unter ihren entsprechenden Beugungsgeometrien.

Bei einigen Ausführungsformen ist vorgesehen, dass mindestens zwei verschiedene Rekonstruktionsgeometrien, die zu verschiedenen der mehreren unterschiedlichen Beugungsstrukturen gehören, entweder eine gemeinsame Rekonstruktionslichteinfallrichtung aufweisen oder eine gemeinsame Beugungslichtlichtausfallrichtung aufweisen oder die Rekonstruktionslichteinfallrichtung der einen der mindestens zwei verschiedenen Rekonstruktionsgeometrien mit der Beugungslichtlichtausfallrichtung der anderen der mindestens zwei verschiedenen Rekonstruktionsgeometrien zusammenfällt. Hierdurch können bei der Herstellung mehrere Beugungsstrukturen zeitgleich (bei einem Überlapp der Bereiche der Beugungsstrukturen) oder zumindest ohne Änderung der Einstrahlrichtung des Rekonstruktionslichts relativ zu der einen Oberfläche des Masterkörpers des Hologrammmasters ausgeführt werden. In einem fertigen, kopierten Sicherheitselement können bei gleicher Belichtungsrichtung mit Rekonstruktionslicht durch Wechsel der Betrachtungsrichtungen/Erfassungsrichtungen unterschiedliche der vorzugsweise intensitätsmoduliert in Volumenhologramme kopierten Beugungsstrukturen erfasst werden. Ist die Beugungslichtausfallrichtung identisch, gilt analoges für einen Wechsel der Einstrahlrichtung des Rekonstruktionslichts ohne eine Änderung der Erfassungsrichtung.

Nachfolgend wird die Erfindung unter Bezugnahme auf eine Zeichnung näher erläutert. Hierbei zeigen:
- Fig. 1: eine schematische Darstellung eine Hologrammmasters mit drei Bereichen, die jeweils eine Beugungsstruktur aufweisen, wobei die Beugungsstrukturen voneinander verschiedenen sind;
- Fig. 2: eine schematische Darstellung einer Vorrichtung zum individualisierten Kopieren von mehreren verschiedenen Beugungsstrukturen eines Hologrammmasters;
- Fig. 3: eine schematische Darstellung eines Sicherheitsdokuments mit einer integrierten Hologrammschicht als Sicherheitselement mit unter verschiedenen Rekonstruktionsgeometrien rekonstruierenden Hologrammen;
- Fig. 4a bis 4c: schematisch die Rekonstruktion verschiedener Hologramme eines Sicherheitselements unter verschiedenen Rekonstruktionsgeometrien, die von einem Hologrammmaster erzeugt sind, der die Beugungsstrukturen in nebeneinander angeordneten Bereichen aufweist;
- Fig. 5a bis 5c: schematisch die Rekonstruktion verschiedener Hologramme eines Sicherheitselements unter verschiedenen Rekonstruktionsgeometrien, die von einem Hologrammmaster erzeugt sind, bei dem die Bereiche, in denen die Beugungsstrukturen ausgebildet sind, einander deckungsgleich überlappen; und
- Fig. 6: eine schematische Ansicht eines Sicherheitselements und die bei der Verifikation erfassbaren Ansichten.

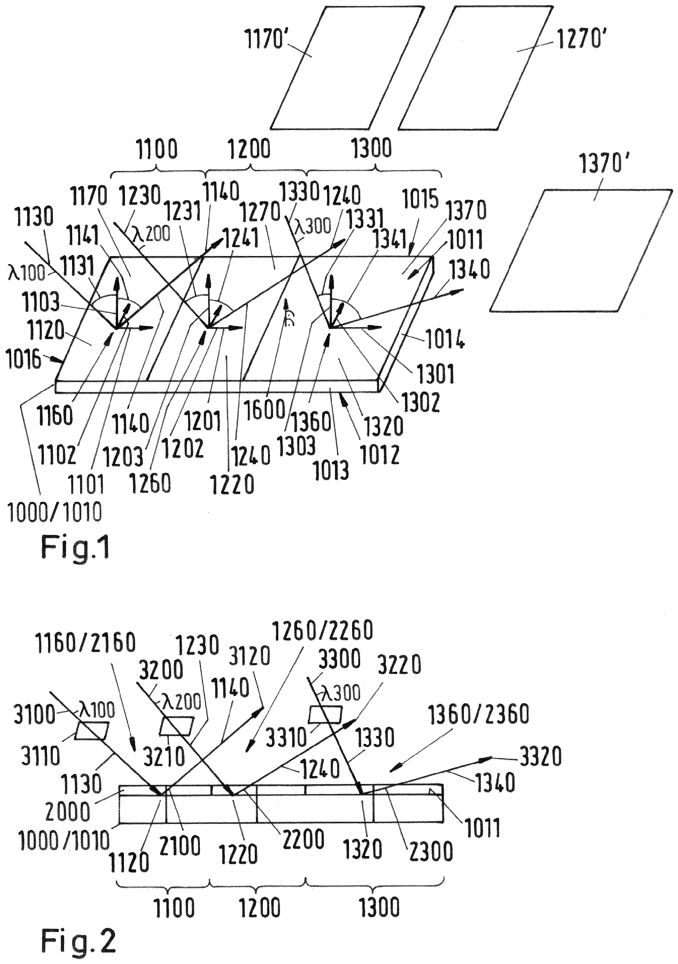

In Fig.1 ist schematisch ein Holgrammmaster 1000 gezeigt. Der Hologrammmaster umfasst einen Masterkörper 1010. Dieser weist eine Oberfläche 1011, eine gegenüberliegende Unterseite 1012 sowie umlaufende Seitenkanten 1013 bis 1016 auf. Der Hologrammmaster 1000 umfasst verschiedene Bereiche 1100, 1200, 1300, die bezüglich der Oberfläche 1011 nebeneinander angeordnet und disjunkt sind.

In jedem der verschiedenen Bereiche 1100, 1200, 1300 ist jeweils eine Beugungsstruktur 1120, 1220, 1320 ausgebildet. Zu jeder Beugungsstruktur 1120, 1220, 1320 existiert eine Belichtungseinfallrichtung 1130, 1230, 1330, unter der einfallendes Licht einer Wellenlänge lambda_100, lambda_200, lambda_300 von der entsprechenden Beugungsstruktur 1120, 1220, 1320 in eine Beugungslichtausfallrichtung 1140, 1240, 1340 gebeugt wird.

Wenn hier in der Beschreibung mehrere Bezugszeichen hinter einem Begriff verwendet werden, die sich hinsichtlich der Ziffer der Hunderterstelle der Bezugszeichen voneinander unterscheiden, so stellen diese Ziffern, in der Regel 1, 2, 3, einen Index für die Identifizierung gleichartiger Instanzen dar. Diese Instanzen lassen sich jeweils einer Beugungsstruktur oder einem hieraus hergestellten Hologramm zuordnen, die über diesen Index identifizierbar oder unterscheidbar sind. Verschiedene Merkmale und Elemente, die so über dieselbe Hunderterziffer miteinander verknüpft sind, sind somit mit derselben Beugungsstruktur oder hieraus hervorgegangenen Hologramm verknüpft. Dieses gilt unabhängig davon, ob die Begriffe in der Einzahl oder der Mehrzahl verwendet werden. Ein Satz wie "Die verschiedenen Bereiche 1100, 1200, 1300 wiesen Beugungsstrukturen 1120, 1220, 1320 auf, besagt somit, dass der Bereich 1100 eine Beugungsstruktur 1120 aufweist, der Bereich 1200 eine Beugungsstruktur 1220 aufweist und der Bereich 1300 eine Beugungsstruktur 1320 aufweist. In keinem Fall sind solche Formulierungen so auszulegen, dass einer oder jeder der Bereiche 1100, 1200, 1300 mehrere Beugungsstrukturen 1120, 1220, 1320 aufweist.

Die Rekonstruktionslichteinfallrichtungen 1130, 1230, 1330 und Beugungslichtausfallrichtungen 1140, 1240, 1340 sind bezüglich mit dem Hologrammmaster gekoppelten Koordinatensystemen definiert, deren Achsrichtungen 1101, 1102;1201, 1202; 1301, 1302 in der Oberfläche liegen und deren dritte Achse 1103, 1203, 1303 mit der Oberflächennormale 1600 des Masterkörpers 1010 im Auftreffpunkt oder Durchtrittspunkt des entsprechenden Lichts gebildet sind, wobei der Durchtrittspunkt/Auftreffpunkt den Ursprung definiert. Entsprechend können Einfallswinkel 1131, 1231, 1331 und Ausfallwinkeln oder Beugungswinkeln 1141, 1241, 1341 definiert werden, die in der Regel einen Elevationsanteil gemessen gegen die Oberflächennormale 1600 und einen Azimutalanteil gemessen in der Oberflächeneben bezogen auf die eine Achsrichtung 1101, 1201, 1301 der Achsrichtungen 1101, 1102; 1201, 1202; 1301, 1302 aufweisen.

Die Beugungsstrukturen 1120, 1220, 1320 sind vorzugsweise als Volumenhologramme ausgebildet. Diese rekonstruieren unter der entsprechenden Rekonstruktionsgeometrie 1160, 1260, 1360, die über Rekonstruktionslichteinfallrichtung 1130, 1230, 1330, die Beugungslichtausfallrichtung 1140, 1240, 1340 und die Wellenlänge lambda_100, lambda_200, lambda _300 festgelegt ist, jeweils mindestens eine, im vorliegenden Fall genau eine, im mathematischen Sinne wegzusammenhängende, eine einheitlich homogene, von null verschiedene Beugungseffizienz aufweisende Fläche 1170, 1270, 1370, die jeweils als eine homogen leuchtende Fläche erfassbar ist. Die erfassten Flächen 1170', 1270', 1370' korrespondieren in der beschriebenen Ausführungsform mit den Bereichen 1100, 1200, 1300 der einen Oberfläche 1011 des Masterkörpers 1010 Hologrammmasters 1000. Vorzugsweise sind die Beugungsstrukturen 1120, 1220, 1320 Reflexionsvolumenhologramme von Streuscheiben, die jeweils den gesamten Bereich 1100, 1200, 1300 ausfüllen.

In Fig. 2 ist schematisch dargestellt, wie die verschiedenen Beugungsstrukturen 1120, 1220, 1320 des Hologrammmasters 1000 als Volumenhologramme in ein holografisches Speichermedium 2000 kopiert werden können. Gleiche technische Merkmale sind in allen Figuren mit denselben Bezugszeichen bezeichnet.

Das Speichermedium 2000 wird in mechanischen Kontakt mit dem Hologrammmaster 1000 gebracht. Hierbei können sich transparente Schutzschichten (nicht dargestellt) zwischen dem Hologrammmaster 1000 und dem Speichermedium 2000 befinden. Der Kontakt muss somit nicht direkt bestehen. Der mechanische Kontakt sorgt jedoch dafür, dass sich das Speichermedium 2000, welches vorzugsweise als Film oder Folie aus einem Photopolymer ausgebildet ist, relativ zu der Beugungsstruktur 1120, 1220, 1320 des Hologrammmasters 1000 in Ruhe befindet.

Kohärentes Rekonstruktionslicht 3100, 3200, 3300 mit der entsprechenden Wellenlänge lambda_100, lambda_200, lambda_300 wird unter der entsprechenden Rekonstruktionslichteinfallrichtung 1130, 1230, 1330 auf den zugehörigen Bereich 1100, 1200, 1300 der Oberfläche 1011 des Masterkörpers 1010 des Hologrammmasters 1000 zeitgleich oder zeitversetzt eingestrahlt. (bei anderen Ausführungsformen, bei denen sich die Bereiche der verschiedenen Beugungsstrukturen zumindest teilweise überlangen, erfolgt die Einstrahlung in den überlagerten Bereichen zeitversetzt. Die Beugungsstrukturen 1120, 1220, 1320 beugen das Rekonstruktionslicht 3100, 3200, 3300 entsprechend unter den Beugungslichtausfallrichtungen 1140, 1240, 1340 in gebeugtes Licht 3120, 3220, 3320. Im Speichermedium interferieren jeweils das Rekonstruktionslicht 3100, 3200, 3300 und das gebeugte Licht 3120, 3220, 3320 und erzeugen somit drei Hologramme 2100, 2200, 2300 in dem Speichermedium 2000. Die zugehörigen Rekonstruktionsgeometrien 2160, 2260, 2360 entsprechen den Rekonstruktionsgeometrien 1160, 1260, 1360 der Beugungsstrukturen die kopiert wurden.

Vorzugsweise ist das Rekonstruktionslicht 3100, 3200, 3300 jeweils gemäß persönlichen Daten einer Person, der das in dem Speichermedium 2000 erzeugten Sicherheitselement 2001 zugeordnet ist, räumlich mittels eine sogenannten SLM (Spatial Light Modulator - räumlichen Lichtmodulators) 3110, 3210, 3310 hinsichtlich der Intensität abhängig vom Auftreffort moduliert. Somit werden die eine homogene Beugungseffizienz aufweisenden Beugungsstrukturen örtlich mit unterschiedlich intensivem Licht kopiert, so dass die kopierten Beugungsstrukturen im Hologramm Licht an unterschiedlichen Stellen unterschiedlich beugen. An Stellen, an denen die Intensität beim Kopieren unterhalb einer Schwellenintensität liegt, werden nicht in das Hologramm kopiert, Stellen, an denen die Intensität beim Kopieren maximal ist, weisen auch im Hologramm eine maximale Beugungsintensität auf. Stellen, die beim Kopieren mit Intensitäten des Rekonstruktionslichts rekonstruiert werden, die zwischen der Schwellenintensität und einer maximalen Intensität liegen, werden mit einer abgeschwächten, aber von null verschiedenen Beugungsintensität in die entsprechenden Hologramme kopiert. So können über die Intensitätsmodulationen eine Schwarz-Weiß-Muster oder Graustufenmuster kopiert werden.

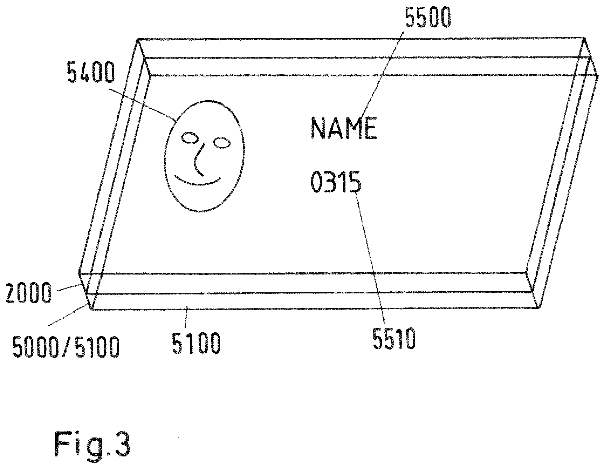

Fig. 3 zeigt exemplarisch ein Sicherheitsdokument 5000 welches als eine Sicht eine holografisches Speichermedium 2000 aufweist, welches mehrere unter verschiedenen Beugungsgeometrien rekonstruierende Hologramme umfasst, die durch ein Kopieren von Beugungsstrukturen entstanden sind, die eine im mathematischen Sinne wegzusammenhängende, eine einheitlich homogene von null verschiedene Beugungseffizienz aufweisende Fläche rekonstruieren. Beim Kopieren ist das Rekonstruktionslicht jedoch vorzugsweise räumlich intensitätsmoduliert, sodass die resultierenden Hologramme personalisierende Informationen speichern und bei der Rekonstruktion wiedergeben. Das Speichermedium 2000 ist auf ein Substrat 5100 laminiert. Das Sicherheitsdokument 5000 kann weitere Substratschichten oder Schutzschichten umfassen, die aus Gründen der Vereinfachung hier nicht gezeigt sind.

Zusätzlich kann das Sicherheitsdokument 5000 eine Vielzahl weiterer Sicherheitsmerkmale und Sicherheitselemente, auch in dem holografischen Speichermedium 2000 umfassen. Beispielsweise sind exemplarisch ein aufgedrucktes Portraitbild 5400 und aufgedruckte alphanumerische Angaben, wie Name 5500 und Ausweisnummer 5510, dargestellt.

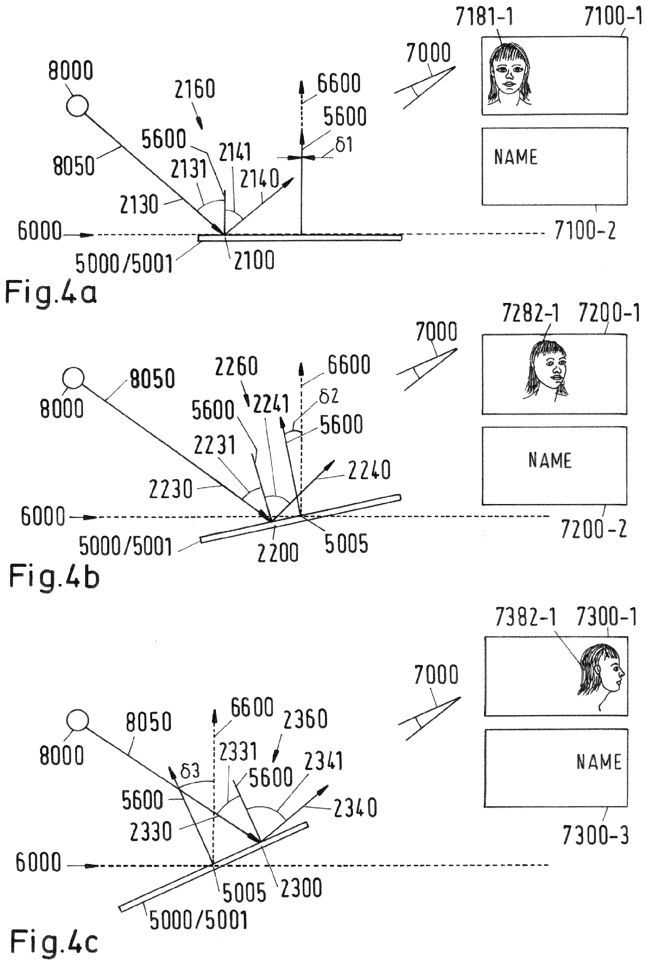

Anhand von Fig. 4a bis 4c wird schematisch die Rekonstruktion verschiedener als Volumenreflexionshologramme ausgebildeter Hologramme 2100, 2200, 2300 eines als kartenförmiges Sicherheitsdokument 5000 ausgebildeten Sicherheitselements 5001 unter verschiedenen Rekonstruktionsgeometrien 2160, 2260, 2360 beschrieben, die von einem Hologrammmaster erzeugt sind, der die Beugungsstrukturen in nebeneinander angeordneten Bereichen aufweist.

Eine horizontale ortsfeste Ebene 6000 ist gestrichelt dargestellt. Deren Oberflächennormale 6600 weist nach oben. In der Ebene und parallel hierzu ist das Sicherheitsdokument 5000 als Sicherheitselement 5001 angeordnet, welches die verschiedene Hologramme 2100, 2200, 2300 umfasst. Die Oberflächennormale 6600 der Ebene 6000 und die Oberflächennormale 5600 des Sicherheitsdokuments 5000 schließen einen Verkippungswinkel δ1 ein.

Relativ zu der Ebene 6000 sind eine Lichtquelle 8000, die beispielsweise weißes Licht erzeugt, und ein Erfassungseinrichtung 7000 oder ein Auge eines Betrachters angeordnet, sodass die Einfallrichtung des Lichts 8050 der Lichtquelle 8000 unter der Rekonstruktionslichteinfallrichtung 2130 des Hologramms 2100 einfällt und das gebeugte Licht unter der Beugungslichtausfallrichtung 2140 in die Erfassungseinrichtung 7000 oder das Auge gebeugt wird. Die entsprechenden Einfallwinkel 2131 und der Beugungswinkel 2141 der Rekonstruktionsgeometrie 2160 sind gegen die Oberflächennormale 5600 des Sicherheitsdokuments 5000 aufgetragen. In einer ersten Variant (jeweils gekennzeichnet durch ein nachgestelltes "-1") wird ein Portraitbild 7181-1, das dem aufgedruckten Portraitbild 5400 auf dem Sicherheitsdokument 5000 entspricht rekonstruiert. Die erfasste Ansicht 7100-1 ist schematisch dargestellt. Es sind hier jeweils nur die holografisch rekonstruierten Merkmale gezeigt, um die Darstellung zum Zwecke der Erläuterung zu vereinfachen.

Das Sicherheitsdokument wird nun um eine in der Ebene 6000 und dem Dokument 5000 liegende Achse 5005 gekippt. Dieses ist in Fig. 4b gezeigt. Die Oberflächennormale 6600 der Ebene 6000 und die Oberflächennormale 5600 des Sicherheitsdokuments 5000 schließen jetzt einen Verkippungswinkel δ2 ein. in dieser Stellung ist die Rekonstruktionsgeometrie 2260 des Hologramms 2200 erfüllt. Der entsprechenden Einfallwinkel 2231 und der Beugungswinkel 2241 der Rekonstruktionsgeometrie 2260 sind gegen die Oberflächennormale 5600 des Sicherheitsdokuments 5000 aufgetragen.

Die Ansicht 7200-1 des Sicherheitsdokuments zeigt hier versetzt zur Mitte ein Halbprofilbild 7282-1 der Person, die in dem Portraitbild 7181 der Ansicht 7100-1 dargestellt ist. Das Halbprofilbild 7282-1 zeigt die Person von ihrer rechten Seite, obwohl man eine Ansicht von links aufgrund der Kippbewegung erwarten würde, wenn in dem Sicherheitsdokument 5000 ein 3D-Hologramm der Person gespeichert wäre.
in Fig. 4c ist das Sicherheitsdokument 5000 noch weiter verkippt. Die Oberflächennormale 6600 der Ebene 6000 und die Oberflächennormale 5600 des Sicherheitsdokuments 5000 schließen jetzt einen Verkippungswinkel δ3 ein Der entsprechenden Einfallwinkel 2331 und der Beugungswinkel 2341 der Rekonstruktionsgeometrie 2360 des dritten Hologramms 2300 sind gegen die Oberflächennormale 5600 des Sicherheitsdokuments 5000 aufgetragen.

Die entsprechende Ansicht gemäß der ersten Variante 7300-1 zeigt auf der rechten Seite eine Profilansicht 7383-1 der rechten Seite der Person, der das Sicherheitsdokument 5000 zugeordnet ist.

Die drei Ansichten können bei derselben Wellenlänge oder unterschiedlichen Wellenlängen rekonstruieren. Beispielsweise kann die Abfolge der Wellenlängen übersetzt in die zugehörigen Spektralfarben von blau bei der Ansicht 7100-1, über rot bei der Ansicht 7200-1 zur grün bei der Ansicht 7300-1 wechseln was von der Abfolge im natürlichen Sonnenlichtspektrum als auch der Reihenfolge abweicht, die man ein einer Gitterstruktur aufgrund der Winkel relativ zur Oberflächennormale erwarten würde. Eine Nachbildung wir hierüber weiter erschwert.

Die Ansichten 7100-2, 7200-2, 7300-2 zeigen eine mögliche andere Ausgestaltung des kopierten personalisierten Inhalts. Das Wort "Name", d.h. der Name der Person, wird beim Kippen des Sicherheitsdokuments als kinetischer Schriftzug, der von links nach rechts wandert, erfasst und wahrgenommen.

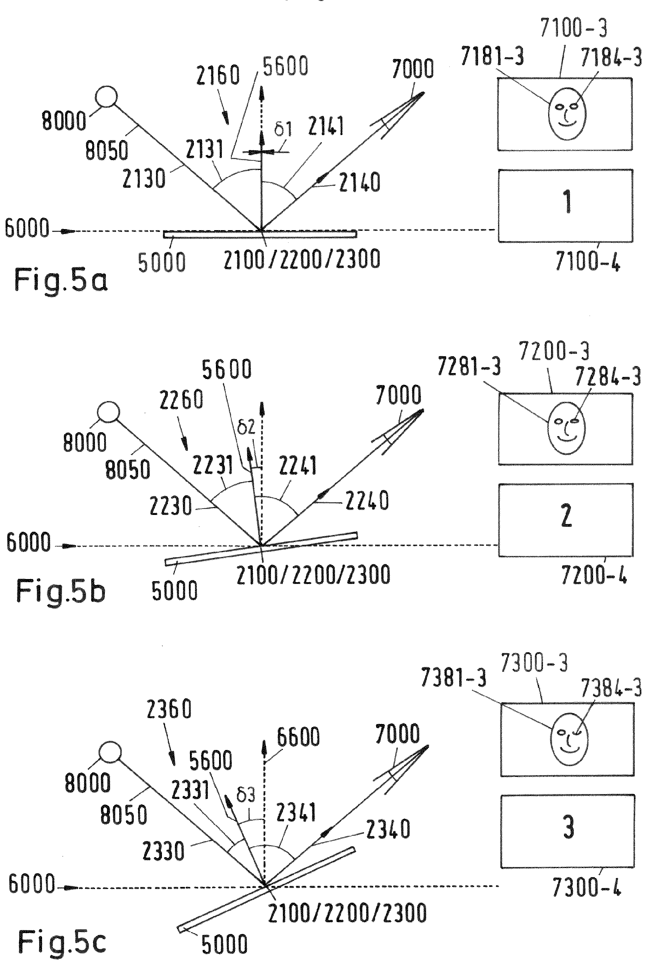

In Fig. 5a bis 5c ist analog die Situation für ein Sicherheitsdokument 5000 gezeigt, dessen Speichermedium verschiedene Hologramme 2100, 2200, 2300 umfasst, die unter verschiedenen Rekonstruktionsgeometrien 2160, 2260, 2360 rekonstruieren. Die Belichtungseinfallrichtungen sind mit 2130, 2230, 2330 und die Beugungsrichtungen mit 2140, 2240, 2340 bezeichnet. Die zugehörigen Einfallswinkel 2131, 2231, 2331 und Beugungswinkel 2141, 2241, 2341 sind bezüglich der gemeinsamen Oberflächennormale 5600 des Sicherheitsdokuments 5000 definiert, die mit den Oberflächennormalen der Hologramme 2100, 2200, 2300 zusammenfällt. Die Hologramme 2100, 2200, 2300 sind von einem Hologrammmaster erzeugt, bei dem die Bereiche, in denen die Beugungsstrukturen ausgebildet sind, einander deckungsgleich überlappen.

Die Ansichten 7100-3, 7200-3, 7300-3 einer dritten Variante und 7100-4, 7200-4, 7300-4 vierten Variante, die mit der Ausführungsform nach Fig. 5a bis 5c verknüpft sind, sind in den entsprechenden Figuren Fig. 5a bis 5c schematisch dargestellt. Bei dem Portraitbild wird von der Person beim Verkippen beispielsweise deren linkes Auge 7184-3, 7284-3, 7384-3 geschlossen. In der Ansicht 7100-3 ist es offen, in der Ansicht 7200-3 halb geschlossen, und in der Ansicht 7300-3 vollständig geschlossen.

In der Variante 4, wird der alphanumerische Schriftzug "123" beim Verkippen an derselben Position des Sicherheitsdokument 5000 "durchgeblättert". Die Ziffern "1", "2" und "3" erscheinen und verschwinden entsprechend.

Auch die Varianten 3 und 4 können alle bei derselben Wellenlänge oder jeweils bei einer anderen Wellenlänge rekonstruieren. Es kann auch nur eines der Hologramme bei einer anderen Wellenlänge rekonstruieren.

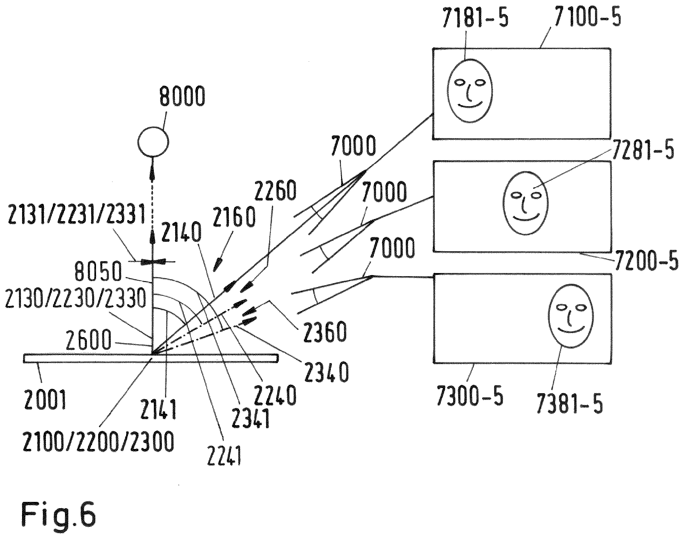

In Fig. 6 ist eine Ausführungsform eines Sicherheitselements 2001 gezeigt, bei dem ein und dieselbe bildliche Information, z.B. das Portraitbild 7181-5, 7281-5, 7381-5, in den verschiedenen Hologrammen 2100, 2200, 2300 des Sicherheitselementes 2001 gespeichert ist, die bei der Rekonstruktion unter den verschiedenen Rekonstruktionsgeometrien 2160, 2260, 2360 jedoch an unterschiedlichen Positionen relativ zum Sicherheitselement erfasst wird und daher als sich bewegend wahrgenommen wird. Beim Ändern der Erfassungsposition blitzt diese Information jeweils an unterschiedlichen Positionen in den entsprechend erfassten Ansichten 7100-5, 7200-5, 7300-5 auf.

Die unterschiedlichen Beugungsstrukturen des Hologrammmasters (nicht dargestellt) und die hieraus erzeugten Hologramme 2100, 2200, 2300 weisen bei dieser Ausführungsform eine gemeinsame, d.h. identische, Rekonstruktionslichteinfallrichtung, beispielsweise parallel zur Oberflächennormale 2600 auf. Die unterschiedlichen Ansichten 7100-5, 7200-5, 7300-5 der Hologramme 2100, 2200, 2300 des Sicherheitselements 2001 sind unter verschiedenen Beugungslichtausfallrichtungen 2140, 2240, 2340 erfassbar.

Es versteht sich, dass die Anzahl der Beugungsstrukturen und Hologramme hier nur beispielhaft angegeben ist. Die personalisierten Inhalte der Hologramme sind nur beispielhaft erwähnt. Die verschiedenen Merkmale der unterschiedlichen Ausführungsformen können miteinander kombiniert werden, um weitere Ausführungsformen der Erfindung zu bilden.

### Bezugszeichenliste

- 1000: Hologrammmaster
- 1001, 1002: Achsrichtung
- 1010: Masterkörper
- 1011: Oberfläche
- 1012: Unterseite
- 1013 bis 1016: Seitenkanten
- 1600: Oberflächennormale
- 1100: Bereich
- 1120,: Beugungsstruktur
- 1130: Belichtungseinfallrichtung
- 1131: Einfallswinkel
- 1140: Beugungslichtausfallrichtung
- 1141: Beugungswinkeln
- 1160: Rekonstruktionsgeometrie
- 1170: Fläche
- 1170': erfasste Fläche
- 1200: Bereich
- 1220,: Beugungsstruktur
- 1230: Belichtungseinfallrichtung
- 1231: Einfallswinkel
- 1240: Beugungslichtausfallrichtung
- 1241: Beugungswinkeln
- 1260: Rekonstruktionsgeometrie
- 1270: Fläche
- 1270': erfasste Fläche
- 1300: Bereich
- 1320,: Beugungsstruktur
- 1330: Belichtungseinfallrichtung
- 1331: Einfallswinkel
- 1340: Beugungslichtausfallrichtung
- 1341: Beugungswinkeln
- 1360: Rekonstruktionsgeometrie
- 1370: Fläche
- 1370': erfasste Fläche
- 2000: Speichermedium
- 2001: Sicherheitselement
- 2100: Hologramm
- 2130: Rekonstruktionslichteinfallrichtung
- 2131: Einfallwinkel
- 2140: Beugungslichtausfallrichtungen
- 2141: Beugungswinkel
- 2160: Rekonstruktionsgeometrie
- 2200: Hologramm
- 2230: Rekonstruktionslichteinfallrichtung
- 2231: Einfallwinkel
- 2240: Beugungslichtausfallrichtungen
- 2241: Beugungswinkel
- 2260: Rekonstruktionsgeometrie
- 2300: Hologramm
- 2330: Rekonstruktionslichteinfallrichtung
- 2331: Einfallwinkel
- 2340: Beugungslichtausfallrichtungen
- 2341: Beugungswinkel
- 2360: Rekonstruktionsgeometrie
- 3100: Rekonstruktionslicht
- 3110: räumlicher Lichtmodulator (SLM)
- 3120: gebeugtes Licht
- 3200: Rekonstruktionslicht
- 3210: räumlicher Lichtmodulator (SLM)
- 3220: gebeugtes Licht
- 3300: Rekonstruktionslicht
- 3310: räumlicher Lichtmodulator (SLM)
- 3320: gebeugtes Licht
- 5000: Sicherheitsdokument
- 5001: Sicherheitselement
- 5100: Substrat
- 5400: Portraitbild
- 5500: Name
- 5510: Ausweisnummer
- 5600: Oberflächennormale
- 6000: Ebene
- 6600: Oberflächennormale
- 7000: Erfassungseinrichtung
- 7100-1: Ansicht des rekonstruierten ersten Hologramms nach Variante 1
- 7100-2: Ansicht des rekonstruierten ersten Hologramms nach Variante 2
- 7100-3: Ansicht des rekonstruierten ersten Hologramms nach Variante 3
- 7100-4: Ansicht des rekonstruierten ersten Hologramms nach Variante 4
- 7100-5: Ansicht des rekonstruierten ersten Hologramms nach Variante 5
- 7181-1, 7181-5: Portraitbild der Person
- 7184-3: Auge (offen)
- 7200-1: Ansicht des rekonstruierten zweiten Hologramms nach Variante 1
- 7200-2: Ansicht des rekonstruierten zweiten Hologramms nach Variante 2
- 7200-3: Ansicht des rekonstruierten zweiten Hologramms nach Variante 3
- 7200-4: Ansicht des rekonstruierten zweiten Hologramms nach Variante 4
- 7200-5: Ansicht des rekonstruierten zweiten Hologramms nach Variante 5
- 7281-5: Portraitbild der Person
- 7282-1: Halbprofilbild der Person von deren rechter Seite
- 7284-3: Auge (halb geschlossen)
- 7300-1: Ansicht des rekonstruierten dritten Hologramms nach Variante 1
- 7300-2: Ansicht des rekonstruierten dritten Hologramms nach Variante 2
- 7300-3: Ansicht des rekonstruierten dritten Hologramms nach Variante 3
- 7300-4: Ansicht des rekonstruierten dritten Hologramms nach Variante 4
- 7300-5: Ansicht des rekonstruierten dritten Hologramms nach Variante 5
- 7381-5: Portraitbild der Person
- 7383-1: Profilansicht der rechten Seite der Person
- 7384-3: Auge (geschlossen)
- δ1, δ2, δ3: Verkippungswinkel

## Patentansprüche

1. Hologrammmaster (1000) für das Erzeugen von Sicherheitselementen (5001) mit einem optisch variablen holografischen Sicherheitsmerkmal umfassend einen Masterkörper (1010) mit einer Oberfläche (1011), wobei in dem Masterkörper (1010) mehrere unterschiedliche Beugungsstrukturen (1120, 1220, 1320) ausgebildet sind, wobei jede der mehreren unterschiedlichen Beugungsstrukturen (1120, 1220, 1320) eine Rekonstruktionsgeometrie aufweist, die von den Rekonstruktionsgeometrien der andern der mehreren unterschiedlichen Beugungsstrukturen (1120, 1220, 1320) verschieden ist, wobei jede Rekonstruktionsgeometrie durch eine Rekonstruktionslichteinfallrichtung und eine Beugungslichtausfallrichtung bezogen auf die eine Oberfläche des Masterkörpers definiert sind und bei einer Einstrahlung von Rekonstruktionslicht entlang der Rekonstruktionslichteinfallrichtung der entsprechenden der mehreren unterschiedlichen Beugungsstrukturen (1120, 1220, 1320) diese Licht in die Beugungslichtausfallrichtung beugt, wobei jede der mehreren unterschiedlichen Beugungsstrukturen unter der jeweiligen (zugehörigen) Rekonstruktionsgeometrie (1160, 1260, 1360) jeweils mindestens eine im mathematischen Sinne wegzusammenhängende, eine einheitliche homogene von null verschiedene Beugungseffizienz aufweisende Fläche (1170, 1270, 1370) rekonstruiert, die jeweils als eine homogen leuchtende Fläche (1170`, 1270', 1370') erfassbar ist.

2. Hologrammmaster nach Anspruch 1, **dadurch gekennzeichnet, dass** die mehreren unterschiedlichen Beugungsstrukturen (1120, 1220, 1320) Volumenhologramme sind, vorzugsweise Volumenreflexionshologramme sind.

3. Hologrammmaster nach Anspruch 1 oder 2, **dadurch gekennzeichnet, dass** die mehreren unterschiedlichen Beugungsstrukturen (1120, 1220, 1320) in dem Hologrammmaster bezogen auf dessen eine Oberfläche des Masterkörpers in unterschiedlichen nebeneinander angeordneten voneinander disjunkten Bereichen (1100, 1200, 1300) ausgebildet sind.

4. Hologrammmaster nach Anspruch 1 oder 2, **dadurch gekennzeichnet, dass** die mehreren unterschiedlichen Beugungsstrukturen (1120, 1220, 1320) in dem Hologrammmaster bezogen auf dessen eine Oberfläche des Masterkörpers (1010) in einander zumindest teilweise überlappenden Bereichen ausgebildet sind.

5. Hologrammmaster nach Anspruch 4, **dadurch gekennzeichnet, dass** einer der einander zumindest teilweise überlappenden Bereiche, in dem zumindest eine der mehreren unterschiedlichen Beugungsstrukturen (1120, 1220, 1320) ausgebildet ist, einen anderen der einander zumindest teilweise überlappenden Bereiche, in dem eine andere der unterschiedlichen Beugungsstrukturen (1120, 1220, 1320) ausgebildet ist, in dem Hologrammmaster bezogen auf dessen Oberfläche vollständig überlappt.

6. Hologrammmaster nach Anspruch 5, **dadurch gekennzeichnet, dass** der eine der einander zumindest teilweise überlappenden Bereiche und der andere der einander zumindest teilweise überlappenden Bereiche in dem Hologrammmaster bezogen auf dessen eine Oberfläche des Masterkörpers deckungsgleich ausgebildet sind.

7. Hologrammmaster nach einem der vorangehenden Ansprüche, **dadurch gekennzeichnet, dass** mindestens zwei verschiedene Rekonstruktionsgeometrien, die zu verschiedenen der mehreren unterschiedlichen Beugungsstrukturen (1120, 1220, 1320) gehören, entweder eine gemeinsame Rekonstruktionslichteinfallrichtung aufweisen oder eine gemeinsame Beugungslichtlichtausfallrichtung aufweisen oder die Rekonstruktionslichteinfallrichtung der einen der mindestens zwei verschiedenen Rekonstruktionsgeometrien mit der Beugungslichtlichtausfallrichtung der anderen der mindestens zwei verschiedenen Rekonstruktionsgeometrien zusammenfällt.

8. Verfahren zum Erzeugen eines Sicherheitselements mit einem optisch variablen holografischen Sicherheitsmerkmal umfassend
Bereitstellen eines Hologrammmasters nach einen der Ansprüche 1 bis 7, der den Masterkörper mit den mehren unterschiedlichen Beugungsstrukturen (1120, 1220, 1320) aufweist;
Bereitstellen eines holografischen Speichermediums;
Anordnen des holografischen Speichermediums in mechanischem Kontakt mit der eine Oberfläche des Masterkörpers des Hologrammmasters;
Erzeugen kohärenten Lichts und Einstrahlen des kohärenten Lichts auf den Hologrammmaster und das holografische Speichermedium, dass zumindest ein Teil des kohärenten Lichts an dem Hologrammmaster gebeugt wird und das holografische Speichermedium sowohl von gebeugtem als auch von nicht gebeugtem kohärenten Licht durchstrahlt wird, so dass eine Interferenz zwischen dem gebeugten und dem nicht gebeugten kohärenten Licht als Hologramm oder Hologramme in dem holografischen Speichermedium gespeichert wird,
**dadurch gekennzeichnet, dass**
das Einstrahlen des kohärenten Lichts so erfolgt, dass von mindestens zwei der mehreren unterschiedlichen Beugungsstrukturen (1120, 1220, 1320), die unterschiedliche Rekonstruktionsgeometrien aufweisen und die jeweils mindestens eine im mathematischen Sinne wegzusammenhängende, eine einheitlich homogene von null verschiedene Beugungseffizienz aufweisende Fläche (1170, 1270, 1370) rekonstruieren können, die diese Fläche rekonstruierende Anteile zumindest teilweise rekonstruiert und in die Speicherschicht als Hologramme kopiert werden.

9. Verfahren nach Anspruch 8, **dadurch gekennzeichnet, dass** das Rekonstruktionslicht beim Kopieren von mindestens zwei der in dem Hologrammmaster enthaltenen unterschiedlichen Beugungsstrukturen (1120, 1220, 1320) jeweils flächig hinsichtlich der Intensität moduliert wird, so dass diese mindestens zwei der mehreren unterschiedlichen Beugungsstrukturen (1120, 1220, 1320) modifiziert in das Speichermedium als Hologramme gespeichert werden, so dass die jeweiligen mindestens eine im mathematischen Sinne wegzusammenhängende, eine einheitlich homogene von null verschiedene Beugungseffizienz aufweisenden Flächen (1170, 1270, 1370) mit über diese Fläche variierenden Beugungseffizienzen in die entsprechenden verschiedenen Hologramme in das Speichermedium gespeichert werden.

10. Verfahren nach Anspruch 9, **dadurch gekennzeichnet, dass** die mindestens zwei der mehreren unterschiedlichen Beugungsstrukturen (1120, 1220, 1320) mit unterschiedlich flächig moduliertem Rekonstruktionslicht kopiert werden.

11. Verfahren nach Anspruch 9 oder 10, **dadurch gekennzeichnet, dass** das unterschiedliche flächige Modulieren gemäß persönlichen Informationen einer Person erfolgt, der das hergestellte Sicherheitselement zugeordnet ist.

12. Verfahren zum Herstellen einer Vielzahl von Sicherheitselementen nach einem Verfahren gemäß einem der Patentansprüche 9 bis 11, **dadurch gekennzeichnet, dass** sich die holografischen Sicherheitsmerkmale der Vielzahl der Sicherheitselemente einzigartig sind.

13. Sicherheitselement hergestellt nach einem der Verfahren gemäß den Ansprüchen 9 bis 12.
